(19)

Europäisches
Patentamt
European
Patent Office
Office européen
des brevets

(11) **EP 2 107 396 A1**

(12) **EUROPEAN PATENT APPLICATION**

(43) Date of publication:
**07.10.2009 Bulletin 2009/41**

(51) Int Cl.:
***G01V 5/10*** *(2006.01)*

(21) Application number: **08290329.5**

(22) Date of filing: **04.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **Services Pétroliers Schlumberger**
**75007 Paris (FR)**
Designated Contracting States:
**FR**
• **Schlumberger Technology B.V.**
**2514 JG  The Hague (NL)**
Designated Contracting States:
**BG CZ DE DK GR HU IE IT LT NO PL RO SI SK TR**
• **Schlumberger Holdings Limited**
**Tortola (VG)**
Designated Contracting States:
**GB NL**
• **Prad Research and Development Limited**
**Tortola (VG)**
Designated Contracting States:
**AT BE CH CY EE ES FI HR IS LI LU LV MC MT PT SE**

(72) Inventors:
• **Grant, Jeff**
**c/o Etudes et Productions Schlumberger**
**92142 Clamart Cedex (FR)**
• **May, Dale**
**c/o Etudes et Productions Schlumberger**
**92142 Clamart Cedex (FR)**
• **Griffiths, Roger**
**c/o Etudes et Productions Schlumberger**
**92142 Clamart Cedex (FR)**
• **Weller, Geoff**
**c/o Etudes et Productions Schlumberger**
**92142 Clamart Cedex (FR)**
• **Stoller, Christian**
**c/o Etudes et Productions Schlumberger**
**92142 Clamart Cedex (FR)**

(74) Representative: **Rzaniak, Martin**
**Etudes & Productions Schlumberger**
**Intellectual Property Law Department**
**1, rue Henri Becquerel, BP 202**
**92142 Clamart (FR)**

(54) **A sigma measurement downhole**

(57)    A downhole tool and method for performing a base log sigma measurement of a formation. The tool comprising a nuclear source for irradiating the formation and a detector for obtaining a sigma measurement of the irradiated formation. The tool is mounted close to a drill bit arranged to drill a borehole into the formation and is capable of determining a base log sigma measurement of the formation while drilling into the formation.

**EP 2 107 396 A1**

**Description**

FIELD OF THE INVENTION

The invention relates to a downhole tool and in particular, but not exclusively, to a downhole tool for determining the properties a formation.

BACKGROUND OF THE INVENTION

In the oil services industry after a particular hydrocarbon (oil or gas) reservoir has been discovered, the first stage of creating a producing well is concerned with drilling a borehole down into the earth's crust to reach the desired hydrocarbon reservoir. During this drilling phase, often various measurement tools are mounted on, or close to, the tip of the drill so as to provide petroleum engineers with the most up-to-date data of the drilling and the surrounding formation. Specifically, during the drilling stage various detectors can be used, for example, to measure the resistivity and porosity of the surrounding formation and sending the results back to the surface for evaluation. Broadly speaking, this is known as logging-while-drilling (LWD) and provides the quickest information about a surrounding formation being drilled.

After the borehole has been drilled, it may be desirable to lower various measurement tools down the borehole in order to try and characterize the surrounding formation at different depths in the borehole. Such measurements are all useful in providing a more accurate characterization of the constituent elements of the surrounding formation. Specifically, one is able to obtain a more accurate estimate of the quality and quantity of hydrocarbon in the surrounding formation. The hydrocarbon fluid can either be in gas form (i.e. natural gas) or in liquid form (i.e. petroleum or petroleum with dissolved gas).

One measurement that is traditionally only made once the borehole has been drilled is the so-called 'sigma' measurement which measures the thermal neutron capture cross-section of the formation. Specifically, a base log sigma measurement is made after drilling a borehole as a way of monitoring changes to the hydrocarbon content in a producing reservoir over time, as described in US 4,384,205. Thus, sigma logs are often acquired early in the history of a reservoir to create a baseline of the formation sigma under initial fluid saturations. Subsequent sigma logs are acquired at a later date and compared to the baseline log to detect any changes in the response of the formation sigma over time. This process is called time-lapse logging.

Previous methods for acquiring the sigma base log measurement were performed using a wireline tool lowered into the borehole after drilling as described in US 4,384,205. The disadvantage of such methods is that they constrain the acquisition of the sigma base log measurement to a time considerably after the borehole was drilled.

Furthermore, by the time a wireline-conveyed tool can be run to take the base log measurement there generally is significant invasion of mud filtrate (i.e. the fluid part of the mud from the drilling operation) into the wellbore formation. This, combined with the relatively shallow depth of investigation of the sigma measurement, results in a measurement of the invaded formation. Thus the disadvantage of open-hole techniques is that the baseline sigma measurement is predominantly taken of the invaded formation and is therefore not representative of the uninvaded formation which is of primary interest.

A way to overcome this is to take the sigma measurement only once the borehole has been cased and cemented, i.e. to perform a cased-hole sigma measurement. After a period of time, during which it is hoped that the mud filtrate in the near wellbore has dissipated, a cased-hole sigma tool is run to measure what is assumed to be a formation sigma at close to original conditions. The resulting log has a number of associated uncertainties including whether the casing and/or cement affect the log, and whether the mud filtrate has dissipated back to original conditions. Apart from this, the major disadvantage is that the base log sigma measurement has to be delayed until after the cemented casing of the borehole has set and it is felt that the invasion has mostly dissipated.

It is therefore desirable to provide a quicker and more accurate sigma base log measurement that overcomes the aforementioned disadvantages.

SUMMARY OF THE INVENTION

According to one aspect of the invention there is provided a downhole tool for performing a base log sigma measurement of a formation, the tool comprising: a nuclear source for irradiating the formation; a detector for obtaining a sigma measurement of the irradiated formation; and wherein the tool is mounted close to a drill bit arranged to drill a borehole into the formation and is capable of determining a base log sigma measurement of the formation while drilling into the formation.

By taking the base log sigma measurement while drilling and close to the drill bit it is possible to obtain a base log sigma of the formation before invasion by the drilling mud. This improves the accuracy of the base log sigma measurement. Moreover, there is no delay in having to wait for a cased-hole to obtain the sigma base log measurement.

Advantageously, wherein the determined base log sigma is saved into at least one of an electrical and a digital format. This allows a more accurate base log sigma obtained in this way to be sold separately to a client or user of the well in any time-lapse system.

According to another aspect of the invention there is provided a method for performing a base log sigma measurement of a formation comprising: irradiating a formation with a nuclear source; and measuring a sigma of the irradiated formation with a detector wherein said sigma is measured while drilling a borehole into the formation.

Advantageously, wherein the sigma being measured before a drilling mud filtrate is able to significantly invade the formation.

According to another method of the invention there is provided a method for performing a time-lapse log of a formation comprising: irradiating a formation with a nuclear source; measuring a base log sigma of the irradiated formation with a detector, wherein said base sigma is measured while drilling a borehole into the formation; measuring a later sigma at a later time; comparing the base log sigma with the later sigma to determine whether a property of the formation has changed.

Advantageously, wherein the comparison step is further able to determine a quantitative value of the property that has changed.

BRIEF DESCRIPTION OF THE DRAWINGS

Embodiments of the present invention will now be described by way of an example with reference to the accompanying drawings, in which:

Figure 1 shows a wellsite system in which an embodiment of the present invention can be employed;
Figure 2 shows a tool in which an embodiment of the invention can be employed;
Figure 3 shows an example of the neutron population decay rate being used to measure the formation salinity;
Figure 4 shows an example of a typical scale of sigma values for different components of the subsurface formation; and
Figure 5 shows an example of a time-lapse log according to an embodiment of the invention.

DETAILED DESCRIPTION OF EMBODIMENTS OF THE INVENTION

In the following detailed description of the preferred embodiments, reference is made to the accompanying drawings, which form a part hereof, and within which are shown by way of illustration specific embodiments by which the invention may be practiced. It is to be understood that other embodiments may be utilized and structural changes may be made without departing from the scope of the invention.

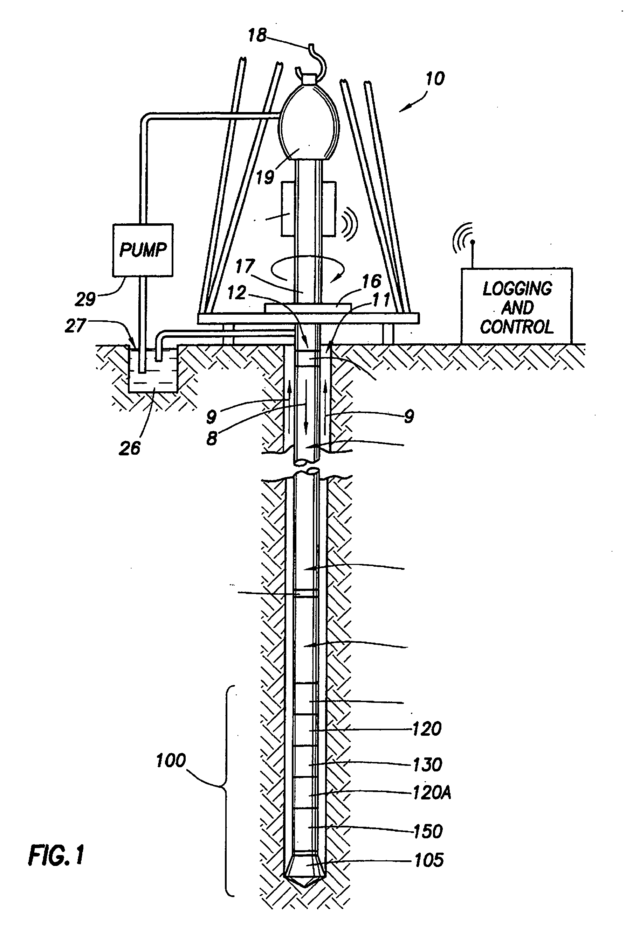

Figure 1 illustrates a wellsite system in which the present invention can be employed. The wellsite can be onshore or offshore. In this exemplary system, a borehole 11 is formed in subsurface formations by rotary drilling in a manner that is well known. Further embodiments of the invention can also use directional drilling.

A drill string 12 is suspended within the borehole 11 and has a bottomhole assembly 100 which includes a drill bit 105 at its lower end. The surface system includes platform and derrick assembly 10 positioned over the borehole 11, the assembly 10 including a rotary table 16, kelly 17, hook 18 and rotary swivel 19. The drill string 12 is rotated by the rotary table 16, energized by means not shown, which engages the kelly 17 at the upper end of the drill string. The drill string 12 is suspended from a hook 18, attached to a traveling block (also not shown), through the kelly 17 and a rotary swivel 19 which permits rotation of the drill string relative to the hook. As is well known, a top drive system could alternatively be used.

In the example of this embodiment, the surface system further includes drilling fluid or mud 26 stored in a pit 27 formed at the well site. A pump 29 delivers the drilling fluid 26 to the interior of the drill string 12 via a port in the swivel 19, causing the drilling fluid to flow downwardly through the drill string 12 as indicated by the directional arrow 8. The drilling fluid exits the drill string 12 via ports in the drill bit 105, and then circulates upwardly through the annulus region between the outside of the drill string and the wall of the borehole, as indicated by the directional arrows 9. In this well known manner, the drilling fluid lubricates the drill bit 105 and carries formation cuttings up to the surface as it is returned to the pit 27 for recirculation.

The bottomhole assembly 100 of the illustrated embodiment consists of a logging-while-drilling (LWD) module 120, a measuring-while-drilling (MWD) module 130, a rotary-steerable system and motor, and drill bit 105.

The LWD module 120 is housed in a special type of drill collar, as is known in the art, and can contain one or a plurality of known types of logging tools. It will also be understood that more than one LWD and/or MWD module can be employed, e.g. as represented at 120A. (References, throughout, to a module at the position of 120 can alternatively mean a module at the position of 120A as well.) The LWD module includes capabilities for measuring, processing, and storing information, as well as for communicating with the surface equipment. In the present embodiment, the LWD module includes a nuclear measuring device.

The MWD module 130 is also housed in a special type of drill collar, as is known in the art, and can contain one or more devices for measuring characteristics of the drill string and drill bit. The MWD tool further includes an apparatus (not shown) for generating electrical power to the downhole system. This may typically include a mud turbine generator powered by the flow of the drilling fluid, it being understood that other power and/or battery systems may be employed. In the present embodiment, the MWD module includes one or more of the following types of measuring devices: a weight-on-bit measuring device, a torque measuring device, a vibration measuring device, a shock measuring device, a stick slip measuring device, a direction measuring device, and an inclination measuring device.

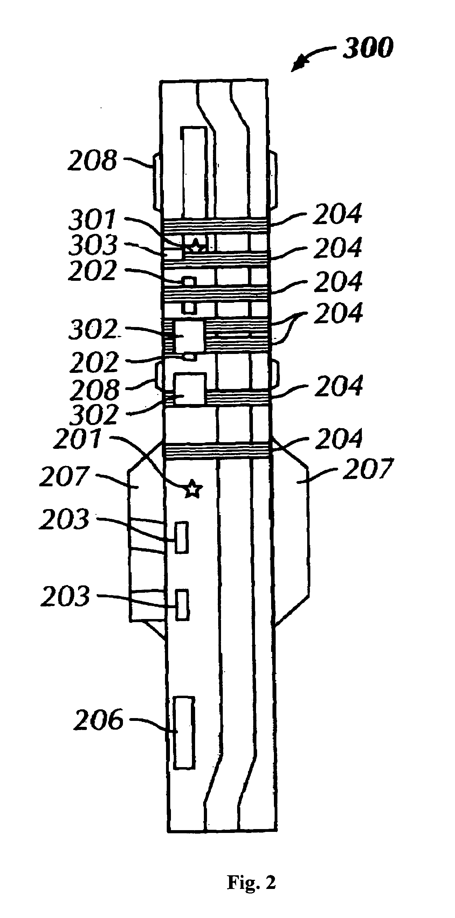

Figure 2 shows an example of a tool 300 according to an embodiment of the present invention. To perform a sigma measurement for example, a pulsed neutron source 301 is used. Such a source is typically based on the d-T reaction

$$^{2}H(^{3}H, n)^{4}He = d(T,n)\alpha$$

However, other neutron producing reactions such as the d-D reaction can also be employed. The tool shown in figure 2 also includes gamma-ray detectors 302. In addition to the gamma-ray detectors 302, neutron detectors 202 are also capable of being located in the tool.

The neutron detectors 202 are located at 2 different distances from the pulsed neutron source 301. The neutron detectors 202 are thermal and/or epithermal neutron detectors, e.g., $^{3}$He proportional detectors. The tool 300 further comprises two gamma ray detectors 302 interleaved with the neutron detectors 202. Various shielding devices may be used to minimize a direct passage of neutrons from the source 301 to the detectors 202, and to enhance azimuthal response. The shielding devices further allow to reduce the detection by the gamma ray detectors 302 of gamma rays generated by gamma ray source 201 of the tool 300. The shielding material may typically be tungsten (not shown) when used close to the neutron generator 301, or close to the gamma ray detectors 302, and $^{10}$B (Boron 10) (not shown) when used close to the neutron detectors 202.

A neutron monitor 303 is mounted in proximity of the neutron source 301 to determine or monitor the output of the neutron source. The measurement of the output of the neutron source may be used to normalize count rates measured at the neutron detectors 202 or the gamma-ray detectors 302. It may also be used to regulate the neutron source output. The neutron monitor 303 may typically be realized with a plastic scintillator that detects recoil protons.

The gamma ray detectors 302 are preferably realized using scintillation detectors, e.g., NaI(Tl), BGO, CsI, GSO etc. Each gamma ray detector 302 is located at a different distance from the neutron source 301. A detector 302 located at the smallest distance from the source 301 may be used for a determination of an elemental composition of the formation by measurement and analysis of capture gamma ray spectra. The gamma-ray detectors 302 may furthermore be used to measure a decay of thermal gamma rays in order to deduce a neutron capture cross section (sigma) of the formation and of the borehole. In addition the latter detector 302 may be used to measure gamma ray spectra from inelastic reactions of high energy neutrons. These gamma ray spectra can be analyzed in order to add to the measurement of an elemental composition of the formation and/or for compensation of the neutron-gamma density measurement.

While figure 2 shows the neutron detectors 202 and the gamma ray detectors 302 in alternating positions, it is understood that this is an example only and that other positions may be envisaged. For example, neutron detectors 202 and gamma ray detectors 302 may be located at a same distance from the source 301, next to each other or integrated in order to produce simultaneous neutron and gamma ray measurements. It can also be envisaged that the gamma-ray detectors are located above the neutron source and the neutron detectors below the neutron source. Additionally, it is possible to determine the decay of the thermal neutron population and therefore sigma directly with the thermal neutron detectors.

It should be noted that there are other ways of determining sigma, which are also applicable. For example, by measuring the relative neutron count rates in a pair of neutron detectors, one of which is epithermal and the other one thermal. Preferably, in such an embodiment the two detectors are collocated to obtain a measurement with minimal systematic errors. This measurement does not require the use of a pulsed neutron source, as it relies on a ratio of two count rates.

During and or after the drilling process, fluid from the borehole such as the drilling mud filtrate may begin to penetrate into the surrounding formation mixing with the fluid (hydrocarbon or water) and thereby distorts the measurement. Thus, a preferred embodiment of the invention overcomes this by having the tool 300 mounted as close to possible to the drill bit 105. In Figure 1 for example, the functionality of tool 300 could therefore be mounted within the module 150. In an alternative embodiment, this functionality could be mounted within the electronic section of the drill bit itself.

In an embodiment, the sigma measurement can be performed using a pulsed neutron generator using a multi-burst approach.

For the measurement the neutron production is pulsed on and off in a predetermined sequence. The bursts of neutrons are followed by time intervals during which the neutrons get thermalized and then slowly decay (die away). A typical time interval for observing the time decay of the formation neutron population ranges from several hundred microseconds to about 2 ms. The measurement determines the rate at which the gamma-ray signal decays after the irradiation of the formation with neutron stops. The decay represents the drop in the neutron population near the tool as more and more neutrons get absorbed by nuclei in the formation and the borehole. The decay time constant can be translated into a measure of the thermal neutron capture cross section of the formation.

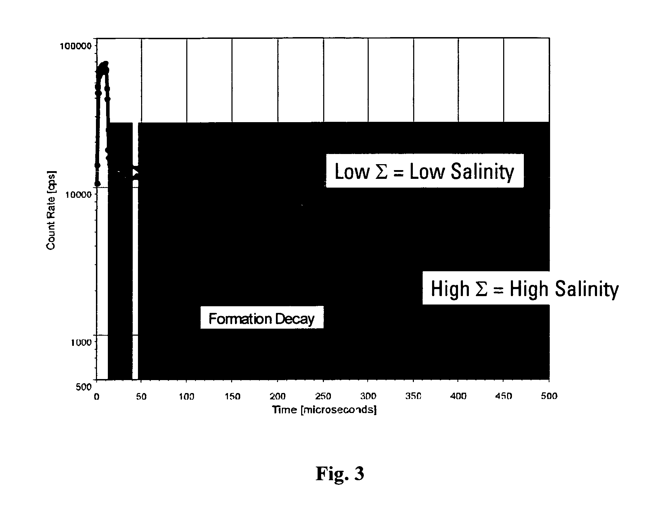

Figure 3 shows an example of the neutron population decay rate being used to measure the formation salinity. Fast decay rates indicate that the formation has a high proportion of elements with an affinity to neutron capture. The most abundant element in subsurface formations with such an affinity is Chlorine. Consequently the sigma measurement is often related to the salinity of the formation as indicated in the exemplary formation decay curve of Figure 3.

For example, in a formation of known lithology, porosity and water salinity, a measured capture cross-section lower than the theoretical value for a 100% water-filled formation indicates the presence of hydrocarbons. Quantitative water saturations can be computed using the exemplary equations shown as follows:

$$\sum\nolimits_{bulk} = (1 - \Phi) * \sum\nolimits_{grain} + \Phi * \sum\nolimits_{fluid} = (1 - \Phi) * \sum\nolimits_{grain} + \Phi * (\sum\nolimits_{water} * S_w + \sum\nolimits_{HC} * (1 - S_w))$$

$$S_w = \frac{(\sum\nolimits_{bulk} - \sum\nolimits_{grain}) + \Phi * (\sum\nolimits_{grain} - \sum\nolimits_{HC})}{\Phi * (\sum\nolimits_{water} - \sum\nolimits_{HC})}$$

Where $\Phi$ denotes the formation porosity, i.e. the fraction of the formation volume not occupied by the matrix, $\Sigma_{grain}$ is the capture cross section of the rock matrix, $\Sigma_{fluid}$ is the capture cross section of the fluid occupying the pore space. $\Sigma_{fluid}$ is the weighted sum of the capture cross sections of the sigma of the hydrocarbon $\Sigma_{HC}$ and the water $\Sigma_{water}$ in the formation. The fraction of water (water saturation) is denoted by $S_w$. The above equation assumes a two-phase fluid of hydrocarbon and water. This means that the pore space not occupied by water is occupied by hydrocarbon.

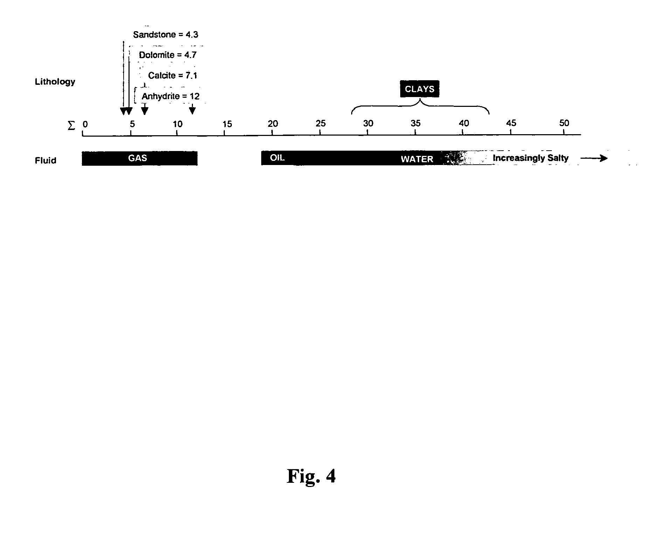

Figure 4 is an example of a typical sigma values for different components of the subsurface formation. From this and the equation above it is possible to link the measured sigma value to the water saturation of the formation, which in turn can be used to determine the hydrocarbon saturation in the formation.

In order to simplify the interpretation and permit monitoring of a reservoir over time, time-lapse logging is performed. Based on the assumption that the porosity and matrix of the formation are not changing, any change in the formation sigma is attributed to displacement of the original fluid by a fluid with a different sigma value. In the case of saline water displacing hydrocarbons this will result in an increase in the formation Sigma.

The introduction of the sigma log in a LWD configuration according to an embodiment of the invention allows for sigma acquisition prior to significant invasion, thereby eliminating the uncertainty about casing, cement and invasion. Time-lapse logging allows for the quantitative and/or qualitative monitoring of fluid movement in the formation and in particular for monitoring the depletion of a reservoir. Specifically, according to an application of one embodiment, the sigma measurement acquired by LWD is used as a baseline log for future time-lapse logging performed typically by wireline (or slick-line) sigma tools. The sigma baseline log can be given to the client in graphical or digital form to serve as the baseline record. A graphical display or dedicated software can be used to correlate future logs with the baseline. This will help in monitoring fluid movements in the reservoir and hence in the optimal completion and drainage of the reservoir.

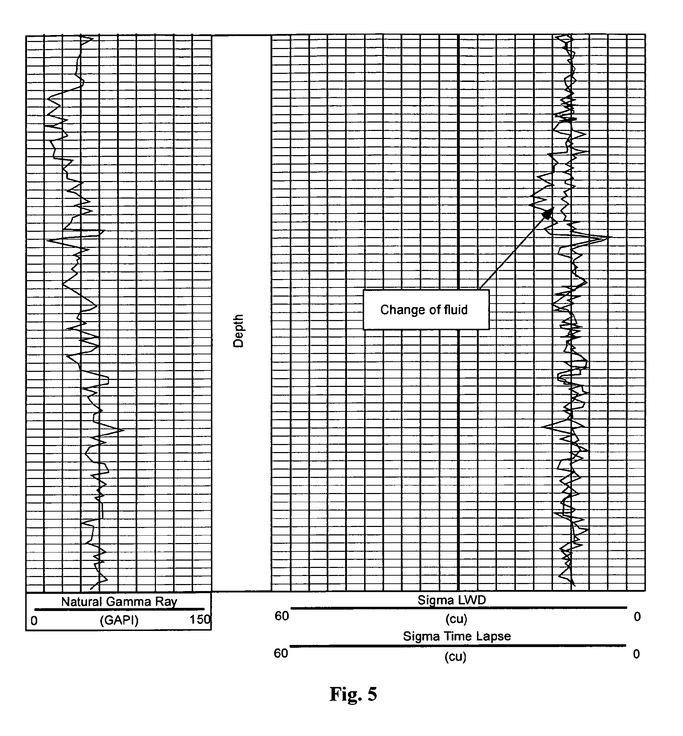

Figure 5 shows an example of a time-lapse log using sigma performed during LWD as a base log as compared against a later sigma log obtained after the well has started production. The increase of sigma indicated by the arrow indicates an influx of a fluid with a sigma (generally assumed to be saline water) displacing a fluid with a lower capture cross-section, such as hydrocarbon or fresh water. That is, the significant increase of sigma in one zone indicates that oil has been replaced by saline water. If porosity and water salinity are known, a quantitative measurement of the change in hydrocarbon or water saturation can be obtained. The measurement is not limited to the detection of a change in hydrocarbon saturation. It can also be used to see a general change in the formation fluid salinity and can therefore be used to indicate injection water break-through or to recognize permeability barriers that prevent the efficient production of some intervals.

A further advantage of taking a sigma measurement while drilling allows for a formation reservoir to be completely swept from top to bottom as the borehole is drilled into the subsurface formation.

In one embodiment, processing of the nuclear data to obtain a sigma base log measurement is performed at the surface using the sigma data sent uphole. However, in another embodiment the processing is performed by the embedded software in the tool positioned downhole.

In any event, the purpose of the functionality is to take a sigma measurement as close to the drilling operation as possible so as to avoid any distorted effects from the drilling mud as it begins to penetrate into the surrounding formation. The sigma measurement obtained is the base log sigma measurement in a time-lapse system to compare against all subsequent sigma measurements to monitor the changes in the producing reservoir over time. The more accurate the initial base log sigma measurement, the more accurate is the whole time-lapse system.

**Claims**

1. A downhole tool for performing a base log sigma measurement of a formation, the tool comprising:

    a nuclear source for irradiating the formation;
    a detector for obtaining a sigma measurement of the irradiated formation; and
    wherein the tool is mounted in close proximity to a drill bit for drilling a borehole into the formation and is capable of determining a base log sigma measurement of the formation while drilling into said formation.

2. The downhole tool of claim 1, wherein a time-lapse log is obtained using said base log sigma measurement and compared with a later sigma log.

3. The downhole tool of claim 2, wherein the later sigma log is obtained after the borehole is cased and is producing hydrocarbons.

4. The downhole tool of claim 2, wherein an increase in the compared base log sigma with the later sigma indicates that a hydrocarbon has been replaced by saline water in said formation.

5. The downhole tool of claim 2, wherein a change in the compared base log sigma with the later sigma indicates a general change of fluid salinity in said formation.

6. The downhole tool of claim 5, where the change indicates at least one of an injection water break-through and a permeability barrier in the formation.

7. The downhole tool of any preceding claim, wherein the base log sigma measurement is determined before the borehole is cased.

8. The downhole tool of any preceding claim, wherein the determined base log sigma is saved into at least one of an electrical and a digital format.

9. The downhole tool of any of claims 1 to 7, wherein the determined base log sigma is in a graphical format.

10. The downhole tool of any preceding claim, in which the nuclear source is a neutron source.

11. A method for performing a base log sigma measurement of a formation comprising:

    irradiating a formation with a nuclear source; and
    measuring a sigma of the irradiated formation with a detector wherein said sigma is measured while drilling a borehole into the formation.

12. The method of claim 11, wherein the sigma being measured before a drilling mud filtrate is able to invade the formation.

13. A method for performing a time-lapse log of a formation comprising:

    irradiating a formation with a nuclear source;
    measuring a base log sigma of the irradiated formation with a detector, wherein said base sigma is measured while drilling a borehole into the formation;
    measuring a later sigma at a later time;

comparing the base log sigma with the later sigma to determine whether a property of the formation has changed.

14. The method of claim 13, wherein the comparison step further being able to determine a quantitative value of the property that has changed.

FIG. 1

Fig. 2

**Fig. 3**

**Lithology**

Sandstone = 4.3

Dolomite = 4.7

Calcite = 7.1

Anhydrite = 12

CLAYS

Σ  0      5      10     15     20     25     30     35     40     45     50

**Fluid**     GAS          OIL          WATER    Increasingly Salty ⟶

**Fig. 4**

**Fig. 5**

Europäisches
Patentamt

European
Patent Office

Office européen
des brevets

# EUROPEAN SEARCH REPORT

Application Number

EP 08 29 0329

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 672 392 A (SCHLUMBERGER SERVICES PETROL [FR]; SCHLUMBERGER TECHNOLOGY BV [NL]; SC) 21 June 2006 (2006-06-21) * paragraphs [0002], [0021], [0043], [0045] * ----- | 1,2,5, 7-14 | INV. G01V5/10 |
| X | US 2006/116823 A1 (GRIFFITHS ROGER [AE]) 1 June 2006 (2006-06-01) * paragraphs [0008], [0032] * ----- | 1,2,5, 8-14 | |
| A | MORRIS C ET AL: "Reservoir monitoring with pulsed neutron capture logs" 67TH EUROPEAN ASSOCIATION OF GEOSCIENTISTS AND ENGINEERS, EAGE CONFERENCE AND EXHIBITION, INCORPORATING SPE EUROPE2005 - EXTENDED ABSTRACTS - 67TH EUROPEAN ASSOCIATION OF GEOSCIENTISTS AND ENGINEERS, EAGE CONFERENCE AND EXHIBITION, INCORPORATING SPE, 2005, pages 363-378, XP002522368 * page 2, column 1, line 43 - column 3, line 27 * ----- | 1-5, 8-11,13, 14 | |
| A,D | GB 2 087 072 A (SCHLUMBERGER LTD) 19 May 1982 (1982-05-19) & US 4 3 84 205 A ----- | | TECHNICAL FIELDS SEARCHED (IPC) G01V |

The present search report has been drawn up for all claims

| Place of search | Date of completion of the search | Examiner |
|---|---|---|
| The Hague | 3 April 2009 | Anderson, Alex |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

  .........................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 08 29 0329

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2009

| Patent document cited in search report | | | Publication date | Patent family member(s) | | | Publication date |
|---|---|---|---|---|---|---|---|
| EP 1672392 | A | | 21-06-2006 | CA | 2591484 | A1 | 22-06-2006 |
| | | | | WO | 2006063711 | A2 | 22-06-2006 |
| US 2006116823 | A1 | | 01-06-2006 | AT | 331870 | T | 15-07-2006 |
| | | | | AU | 2003292081 | A1 | 22-07-2004 |
| | | | | CN | 1756893 | A | 05-04-2006 |
| | | | | DE | 60212868 | T2 | 01-02-2007 |
| | | | | WO | 2004059122 | A1 | 15-07-2004 |
| | | | | EP | 1435429 | A1 | 07-07-2004 |
| | | | | MX | PA05007045 | A | 18-08-2005 |
| GB 2087072 | A | | 19-05-1982 | CA | 1166768 | A1 | 01-05-1984 |
| | | | | PH | 19344 | A | 02-04-1986 |
| | | | | US | 4384205 | A | 17-05-1983 |

EPO FORM P0459

For more details about this annex : see Official Journal of the European Patent Office, No. 12/82

**REFERENCES CITED IN THE DESCRIPTION**

**Patent documents cited in the description**

- US 4384205 A